(19)

Europäisches
Patentamt
European
Patent Office
Office européen
des brevets

(11)  **EP 4 130 067 A1**

(12)  **EUROPEAN PATENT APPLICATION**
published in accordance with Art. 153(4) EPC

| | |
|---|---|
| (43) Date of publication:<br>**08.02.2023 Bulletin 2023/06** | (51) International Patent Classification (IPC):<br>*C08F 220/26* *(1974.07)*   *C08L 33/14* *(1974.07)* |
| (21) Application number: **21780369.1** | (52) Cooperative Patent Classification (CPC):<br>**C08F 220/26; C08L 33/14** |
| (22) Date of filing: **30.03.2021** | (86) International application number:<br>**PCT/JP2021/013650** |
| | (87) International publication number:<br>**WO 2021/201009 (07.10.2021 Gazette 2021/40)** |

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.03.2020   JP 2020064825**

(71) Applicant: **Osaka Soda Co., Ltd.
Osaka-shi
Osaka 550-0011 (JP)**

(72) Inventors:
• **MOROOKA, Yoshihiro
Osaka-shi, Osaka 550-0011 (JP)**
• **MIKI, Shota
Osaka-shi, Osaka 550-0011 (JP)**
• **KITAGAWA, Motoki
Osaka-shi, Osaka 550-0011 (JP)**

(74) Representative: **Vossius & Partner
Patentanwälte Rechtsanwälte mbB
Siebertstraße 3
81675 München (DE)**

(54)  **ACRYLIC RUBBER, ACRYLIC RUBBER-CONTAINING COMPOSITION, AND CROSSLINKED
RUBBER**

(57)  The present invention discovered the following new problem: when an acrylic rubber is crosslinked, it disadvantageously has a greater crosslinking shrinkage, and this crosslinking shrinkage should be reduced while maintaining good normal-state properties. The present invention discovered that the above problem can be solved by allowing an acrylic rubber to have a specific molecular weight distribution with a high molecular weight fraction and a low molecular weight fraction. Specifically, the present invention discovered that the above problem can be solved by an acrylic rubber containing 32% to 65% of a fraction having a molecular weight of 500,000 or less and 3% to 20% of a fraction having a molecular weight of 2,000,000 or more.

EP 4 130 067 A1

**Description**

TECHNICAL FIELD

The present invention relates to an acrylic rubber, an acrylic rubber-containing composition, and a crosslinked rubber product.

BACKGROUND ART

It is known that an acrylic rubber may be produced by copolymerizing a (meth)acrylic acid ester, e.g., by emulsion polymerization and adding the product to a coagulant aqueous solution to obtain a water-containing crumb, followed by drying the crumb.

Acrylic rubbers are generally known to have excellent heat resistance, oil resistance, and ozone resistance, and the crosslinked products thereof are widely used in automotive components such as seal materials, hose materials, anti-vibration materials, tube materials, belt materials, and boot materials.

When acrylic rubbers are used in these automotive components, they are required to be processed. Patent Literature 1 describes that the processability of an acrylic rubber can be improved without reducing the heat resistance.

CITATION LIST

PATENT LITERATURE

Patent Literature 1: JP 2009-40922 A

SUMMARY OF INVENTION

TECHNICAL PROBLEM

However, as a result of investigation, the present inventors discovered the following new problem: when an acrylic rubber is crosslinked, it disadvantageously has a greater crosslinking shrinkage, and this crosslinking shrinkage should be reduced while maintaining good normal-state properties.

SOLUTION TO PROBLEM

As a result of much experimentation to solve the new problem found by the present inventors, the present inventors discovered that the above problem can be solved by allowing an acrylic rubber to have a specific molecular weight distribution with a high molecular weight fraction and a low molecular weight fraction. Specifically, the present inventors discovered that with an acrylic rubber containing 32% to 65% of a fraction having a molecular weight of 500,000 or less and 3% to 20% of a fraction having a molecular weight of 2,000,000 or less, it is possible to reduce the crosslinking shrinkage while maintaining good normal-state properties.

Exemplary embodiments of the present invention are as follows.

Embodiment 1. An acrylic rubber, containing:

32% to 65% of a fraction having a molecular weight of 500,000 or less; and

3% to 20% of a fraction having a molecular weight of 2,000,000 or more.

Embodiment 2. The acrylic rubber according to Embodiment 1, wherein the acrylic rubber contains 35% to 55% of a fraction having a molecular weight of 500,000 or less and 4% to 18% of a fraction having a molecular weight of 2,000,000 or more.

Embodiment 3. The acrylic rubber according to Embodiment 1 or 2, wherein the acrylic rubber contains 38% to 51% of a fraction having a molecular weight of 500,000 or less and 5% to 15% of a fraction having a molecular weight of 2,000,000 or more.

Embodiment 4. The acrylic rubber according to any one of Embodiments 1 to 3, wherein the acrylic rubber contains a structural unit selected from a structural unit derived from a halogen group-containing unsaturated monomer, a structural unit derived from a carboxy group-containing unsaturated monomer, and a structural unit derived from an epoxy group-containing unsaturated monomer.

Embodiment 5. An acrylic rubber-containing composition, containing:

the acrylic rubber according to any one of Embodiments 1 to 4; and
a crosslinking agent.

Embodiment 6. A crosslinked rubber product, produced from the acrylic rubber composition according to Embodiment 5.

ADVANTAGEOUS EFFECTS OF INVENTION

The acrylic rubber of the present invention enables a reduction in crosslinking shrinkage while maintaining good normal-state properties, and thus can be suitably used in products that may be produced from acrylic rubbers.

DESCRIPTION OF EMBODIMENTS

The acrylic rubber of the present invention contains 32% to 65% of a fraction having a molecular weight of 500,000 or less and 3% to 20% of a fraction having a molecular weight of 2,000,000 or more. Such an acrylic rubber enables a reduction in crosslinking shrinkage while maintaining good normal-state properties.

The reason why the acrylic rubber provides the above-described advantageous effect is believed to be as follows.

An acrylic rubber containing a large amount of components having a molecular weight of 2,000,000 or more has good rubber properties including normal-state properties, but tends to have poor processability and further a higher crosslinking shrinkage rate. On the other hand, an acrylic rubber containing a large amount of components having a molecular weight of 500,000 or less has a lower crosslinking shrinkage rate but has inferior rubber properties. An acrylic rubber having a composition with certain amounts of these components provides both reduced crosslinking shrinkage and good rubber properties.

The acrylic rubber of the present invention is preferably a polymer containing a structural unit derived from a (meth) acrylic acid ester as a main component. The term "main component" means that the structural unit derived from a (meth)acrylic acid ester is contained in an amount of 50% by mass or more. Here, the term " (meth) acrylic acid ester" means "acrylic acid ester or methacrylic acid ester", and the same applies for similar expressions in the present application.

Examples of the structural unit derived from a (meth) acrylic acid ester include structural units derived from (meth)acrylic acid alkyl esters and structural units derived from (meth)acrylic acid alkoxyalkyl esters. Preferred among these are structural units derived from C1-C8 alkyl group-containing acrylic acid alkyl esters and structural units derived from C2-C8 alkoxyalkyl group-containing acrylic acid alkoxyalkyl esters. It is more preferred to contain a structural unit derived from a C2-C6 alkyl group-containing acrylic acid alkyl ester and/or a structural unit derived from a C2-C6 alkoxyalkyl group-containing acrylic acid alkoxyalkyl ester, particularly preferably a structural unit derived from a C2-C4 alkyl group-containing acrylic acid alkyl ester and/or a structural unit derived from a C2-C4 alkoxyalkyl group-containing acrylic acid alkoxyalkyl ester. The structural unit derived from a (meth)acrylic acid ester may consist of a single structural unit derived from a (meth) acrylic acid ester or two or more structural units derived from (meth)acrylic acid esters.

Specific examples of (meth)acrylic acid alkyl esters include methyl (meth) acrylate, ethyl (meth) acrylate, n-propyl (meth)acrylate, isopropyl (meth)acrylate, n-butyl (meth)acrylate, isobutyl (meth)acrylate, n-pentyl (meth)acrylate, n-hexyl (meth)acrylate, n-heptyl (meth)acrylate, n-octyl (meth)acrylate, 2-ethylhexyl (meth)acrylate, cyclohexyl (meth)acrylate, and other (meth)acrylic acid esters. These may be used alone or in combinations of two or more. Preferred among these is ethyl (meth)acrylate or n-butyl (meth)acrylate.

Specific examples of (meth)acrylic acid alkoxyalkyl esters include methoxymethyl (meth)acrylate, methoxyethyl (meth)acrylate, ethoxymethyl (meth)acrylate, 2-ethoxyethyl (meth)acrylate, 2-propoxyethyl (meth)acrylate, 2-butoxyethyl (meth)acrylate, 2-methoxypropyl (meth)acrylate, 2-ethoxypropyl (meth)acrylate, 3-methoxypropyl (meth)acrylate, 3-ethoxypropyl (meth)acrylate, 4-methoxybutyl (meth)acrylate, 4-ethoxybutyl (meth)acrylate, and other (meth) acrylic acid esters. These may be used alone or in combinations of two or more. preferred among these is 2-methoxyethyl (meth)acrylate.

In the acrylic rubber of the present invention, the lower limit of the amount of structural units derived from (meth) acrylic acid esters based on the total structural units of the acrylic rubber is more preferably 50% by mass or more, particularly preferably 60% by mass or more, and may be 70% by mass or more, or 80% by mass or more. The upper limit thereof is preferably 99.5% by mass or less, more preferably 99% by mass or less.

The acrylic rubber of the present invention preferably contains a structural unit derived from a crosslinking group-containing unsaturated monomer. Examples of the structural unit derived from a crosslinking group-containing unsaturated monomer include structural units derived from halogen (e.g., chlorine) group-containing unsaturated monomers, structural units derived from carboxy group-containing unsaturated monomers, and structural units derived from epoxy group-containing unsaturated monomers. These may be used alone or in combinations of two or more. Particularly preferred among these are structural units derived from halogen (particularly chlorine) group- or carboxy group-containing unsaturated monomers, with structural units derived from carboxy group-containing unsaturated monomers being most preferred.

Examples of halogen group-containing unsaturated monomers include vinyl monochloroacetate and allyl chloroacetate. These may be used alone or in combinations of two or more. Preferred among these is vinyl monochloroacetate.

Examples of carboxy group-containing unsaturated monomers include unsaturated monocarboxylic acids such as (meth)acrylic acid, crotonic acid, 2-pentenoic acid, and cinnamic acid; unsaturated dicarboxylic acids such as fumaric acid, maleic acid, and itaconic acid; carboxylic anhydrides such as maleic anhydride and citraconic anhydride; butenedioic acid monoacyclic alkyl esters such as monomethyl fumarate, monoethyl fumarate, mono-n-butyl fumarate, monomethyl maleate, monoethyl maleate, mono-2-ethylhexyl maleate, and mono-n-butyl maleate; butenedioic acid monocyclic alkyl esters such as monocyclopentyl fumarate, monocyclohexyl fumarate, monocyclopentyl maleate, and monocyclohexyl maleate; itaconic acid monoesters such as monomethyl itaconate, monoethyl itaconate, mono-n-butyl itaconate, and monocyclohexyl itaconate. These may be used alone or in combinations of two or more. Preferred among these are unsaturated dicarboxylic acid monoesters such as monoethyl fumarate, monopropyl fumarate, monobutyl fumarate, monoethyl itaconate, monopropyl itaconate, and monobutyl itaconate, and the like.

Examples of epoxy group-containing unsaturated monomers include glycidyl (meth) acrylate and (meth) allyl glycidyl ether. These may be used alone or in combinations of two or more.

In the acrylic rubber, the content of structural units derived from crosslinking group-containing unsaturated monomers based on the total structural units of the acrylic rubber is preferably 0.1% by mass or more, more preferably 0.3% by mass or more, particularly preferably 0.5% by mass or more, while it is preferably 10% by mass or less, more preferably 5% by mass or less, particularly preferably 2.5% by mass or less. When the content of structural units derived from crosslinking group-containing unsaturated monomers is in the range indicated above, this is preferred in respect of physical properties such as strength and compression set as well as processability.

In the acrylic rubber of the present invention, the combined amount of structural units derived from (meth) acrylic acid esters and structural units derived from crosslinking group-containing unsaturated monomers based on the total structural units of the acrylic rubber is preferably 55% by mass or more, more preferably 65% by mass or more, still more preferably 75% by mass or more, particularly preferably 85% by mass or more, and may be 100% by mass.

The acrylic rubber of the present invention may further contain a copolymerizable monomer other than the above-mentioned monomers as a structural unit of the acrylic rubber without departing from the gist of the present invention. Examples of such other monomers include ethylenically unsaturated nitrile monomers, (meth)acrylamide monomers, aromatic vinyl monomers, conjugated diene monomers, non-conjugated diene monomers, and other olefin monomers. These may be used alone or in combinations of two or more.

Examples of ethylenically unsaturated nitrile monomers include acrylonitrile, methacrylonitrile, $\alpha$-methoxyacrylonitrile, and vinylidene cyanide. These may be used alone or in combinations of two or more.

Examples of (meth)acrylamide monomers include acrylamide, methacrylamide, diacetone acrylamide, diacetone methacrylamide, N-butoxymethylacrylamide, N-butoxymethylmethacrylamide, N-butoxyethylacrylamide, N-butoxyethylmethacrylamide, N-methoxymethylacrylamide, N-methoxymethylmethacrylamide, N-propyoxymethylacrylamide, N-propyoxymethylmethacrylamide, N-methylacrylamide, N-methylmethacrylamide, N,N-dimethylacrylamide, N,N-dimethylmethacrylamide, N,N-diethylacrylamide, N,N-diethylmethacrylamide, N-methylolacrylamide, N-methylolmethacrylamide, ethacrylamide, crotonamide, cinnamic acid amide, maleic diamide, itaconic diamide, methyl maleamide, methyl itaconamide, maleimide, and itaconimide. These may be used alone or in combinations of two or more.

Examples of aromatic vinyl monomers include styrene, $\alpha$-methylstyrene, o-methylstyrene, p-methylstyrene, o-ethylstyrene, p-ethylstyrene, $\alpha$-fluorostyrene, p-trifluoromethylstyrene, p-methoxystyrene, p-aminostyrene, p-dimethylaminostyrene, p-acetoxystyrene, styrenesulfonic acid and salts thereof, $\alpha$-vinylnaphthalene, 1-vinylnaphthalene-4-sulfonic acid and salts thereof, 2-vinylfluorene, 2-vinylpyridine, 4-vinylpyridine, divinylbenzene, diisopropenylbenzene, and vinylbenzyl chloride. These may be used alone or in combinations of two or more.

Examples of conjugated diene monomers include 1,3-butadiene, 2-methyl-1,3-butadiene, 2-chloro-1,3-butadiene, 1,2-dichloro-1,3-butadiene, 2,3-dichloro-1,3-butadiene, 2,3-dimethyl-1,3-butadiene, 2-neopentyl-1,3-butadiene, 2-bromo-1,3-butadiene, 2-cyano-1,3-butadiene, 1,3-pentadiene, 1,3-hexadiene, chloroprene, and piperylene. These may be used alone or in combinations of two or more.

Examples of non-conjugated diene monomers include 1,4-pentadiene, 1,4-hexadiene, ethylidene norbornene, norbornadiene, and dicyclopentadiene. These may be used alone or in combinations of two or more.

Examples of other olefin monomers include esters such as dicyclopentadienyl acrylate, dicyclopentadienyl methacrylate, dicyclopentadienylethyl acrylate, and dicyclopentadienylethyl methacrylate; and ethylene, propylene, vinyl chloride, vinylidene chloride, 1,2-dichloroethylene, vinyl acetate, vinyl fluoride, vinylidene fluoride, 1,2-difluoroethylene, vinyl bromide, vinylidene bromide, 1,2-dibromoethylene, ethyl vinyl ether, and butyl vinyl ether. These may be used alone or in combinations of two or more.

The amounts of the structural units in the acrylic rubber of the present invention can be determined from the nuclear magnetic resonance spectrum of the produced polymer.

The acrylic rubber of the present invention contains 32% to 65%, preferably 35% to 55%, more preferably 38% to 51%, still more preferably 44% to 51%, particularly preferably 48% to 51% of a fraction having a molecular weight of 500,000 or less.

The acrylic rubber of the present invention contains 3% to 20%, preferably 4% to 18%, particularly preferably 6% to 18%, most preferably 8% to 18%, further most preferably 10% to 18% of a fraction having a molecular weight of 2,000,000 or more.

The percentages of the fraction having a molecular weight of 500,000 or less and the fraction having a molecular weight of 2,000,000 or more in the acrylic rubber of the present invention can be determined by gel permeation chromatography (GPC) with tetrahydrofuran (THF) as a solvent using polystyrene standards.

The percentages of the fraction having a molecular weight of 500,000 or less and the fraction having a molecular weight of 2,000,000 or more may be calculated from the integral value (%) corresponding to a slice molecular weight of 500,000 or less and the integral value (%) corresponding to a slice molecular weight of 2,000,000 or more, respectively, in an integral value curve of the slice area drawn based on a molecular weight distribution curve plotted between the slice molecular weight and the slice area.

The acrylic rubber of the present invention preferably has a molecular weight distribution (weight average molecular weight (Mw) /number average molecular weight (Mn)) of 4.0 or more, more preferably 5.0 or more, still more preferably 6.0 or more, particularly further preferably 6.3 or more. The upper limit of the molecular weight distribution is not limited.

Here, the molecular weight distribution (Mw/Mn) of the acrylic rubber can be determined by gel permeation chromatography (GPC) with tetrahydrofuran (THF) as a solvent using polystyrene standards.

<Acrylic rubber>

The acrylic rubber used in the present invention can be produced by polymerizing various monomers. The monomers used may be commercial products without any limitations.

Here, the acrylic rubber of the present invention is characterized by having a specific molecular weight distribution with a high molecular weight fraction and a low molecular weight fraction. Once a target molecular weight distribution of an acrylic rubber is determined, a person skilled in the art can produce an acrylic rubber having a desired molecular weight distribution without undue burden. For example, the molecular weight distribution can be controlled by changing the type and amount of the polymerization initiator or chain transfer agent used in the polymerization of the acrylic rubber. Moreover, the acrylic rubber may be allowed to have a specific molecular weight distribution with a high molecular weight fraction and a low molecular weight fraction by mixing two or more acrylic rubbers (e.g., a low molecular weight acrylic rubber and a high molecular weight acrylic rubber which are separately prepared).

The mode of the polymerization reaction may be emulsion polymerization, suspension polymerization, bulk polymerization, or solution polymerization, but from standpoints such as easiness in controlling the polymerization reaction, emulsion polymerization under normal pressure is preferred which is generally used in conventionally known acrylic rubber production.

In the case of polymerization by emulsion polymerization, a usual method may be used, and conventional and common polymerization initiator, emulsifier, chain transfer agent, polymerization terminator, and other agents may be used.

Any emulsifier may be used in the present invention, including nonionic emulsifiers and anionic emulsifiers commonly used in emulsion polymerization. Examples of nonionic emulsifiers include polyoxyethylene alkyl ethers, polyoxyethylene alcohol ethers, polyoxyethylene alkyl phenyl ethers, polyoxyethylene polycyclic phenyl ethers, polyoxyalkylene alkyl ethers, sorbitan fatty acid esters, polyoxyethylene fatty acid esters, and polyoxyethylene sorbitan fatty acid esters. Examples of anionic emulsifiers include alkylbenzene sulfonates, alkyl sulfates, polyoxyethylene alkyl ether sulfates, polyoxyalkylene alkyl ether phosphates and salts thereof, and fatty acid salts. One or two or more of these emulsifiers may be used. Typical examples of anionic emulsifiers include sodium dodecyl sulfate, sodium dodecylbenzene sulfonate, and triethanolamine dodecyl sulfate.

The amount of emulsifiers used in the present invention may be an amount commonly used in emulsion polymerization. Specifically, the amount per 100 parts by mass of the monomers constituting the acrylic rubber may be in the range of 0.01 parts by mass to 10 parts by mass, preferably 0.03 parts by mass to 7 parts by mass, still more preferably 0.05 parts by mass to 5 parts by mass. When a reactive surfactant is used as a monomer component, it is not always necessary to add an emulsifier.

Any polymerization initiator may be used in the present invention, including polymerization initiators commonly used in emulsion polymerization. Specific examples thereof include inorganic polymerization initiators typified by persulfates such as potassium persulfate, sodium persulfate, and ammonium persulfate; organic peroxide polymerization initiators such as 2,2-di(4,4-di-(t-butylperoxy)cyclohexyl)propane, 1-di-(t-hexylperoxy)cyclohexane, 1,1-di-(t-butylperoxy)cyclohexane, n-butyl 4,4-di-(t-butylperoxy)valerate, 2,2-di(t-butylperoxy)butane, t-butyl hydroperoxide, cumene hydroperoxide, diisopropylbenzene hydroperoxide, p-menthane hydroperoxide, 1,1,3,3-tetramethylbutyl hydroperoxide, t-butyl cumyl peroxide, di-t-butyl peroxide, di-t-hexyl peroxide, di(2-t-butylperoxyisopropyl)benzene, dicumyl peroxide, diisobutyryl peroxide, di(3,5,5-trimethylhexanoyl)peroxide, dilauroyl peroxide, disuccinic acid peroxide, dibenzoyl peroxide, di(3-methylbenzoyl)peroxide, benzoyl(3-methylbenzoyl)peroxide, diisopropylperoxy dicarbonate, di-n-propylperoxy dicarbonate, di(4-t-butylcyclohexyl)peroxy dicarbonate, di(2-ethylhexyl)peroxy dicarbonate, di-sec-butylperoxy dicarbonate, cumylperoxy neodecanoate, 1,1,3,3-tetramethylbutylperoxy neodecanoate, t-hexylperoxy neodecanoate, t-butylperoxy neodecanoate, t-hexyl peroxypivalate, t-butyl peroxypivalate, 2,5-dimethyl-2,5-di(2-ethylhexanoylperoxy)hexane, 1,1,3,3-tetramethylbutyl peroxy-2-ethylhexanate, t-hexyl peroxy-2-ethylhexanate, t-butyl peroxy-2-ethylhexanate, t-butyl peroxylaurate, t-butyl peroxy-3,5,5-trimethylhexanate, t-hexylperoxyisopropyl monocarbonate, t-butylperoxyisopropyl monocarbonate, t-butylperoxy-2-ethylhexyl monocarbonate, 2,5-dimethyl-2,5-di(benzoylperoxy)hexane, t-butyl peroxyacetate, t-hexyl peroxybenzoate, t-butyl peroxybenzoate, and 2,5-dimethyl-2,5-di(t-butylperoxy)hexane; hydroperoxides; and azo initiators such as azobisisobutyronitrile, 4-4'-azobis(4-cyanovaleric acid), 2-2'-azobis[2-(2-imidazolin-2-yl)propane, 2-2'-azobis(propane-2-carboamidine), 2-2'-azobis[N-(2-carboxyethyl)-2-methylpropaneamide, 2-2'-azobis{2-[1-(2-hydroxyethyl)-2-imidazolin-2-yl]propane }, 2-2'-azobis(1-imino-1-pyrrolidino-2-methylpropane), and 2-2'-azobis{2-methyl-N-[1,1-bis(hydroxymethyl)-2-hydroxyeth yl]propaneamide}. These polymerization initiators may be used alone or in combinations of two or more.

The amount of polymerization initiators used in the present invention may be an amount commonly used in emulsion polymerization. Specifically, the amount per 100 parts by mass of the monomers constituting the acrylic rubber may be in the range of 0.01 parts by mass to 5 parts by mass.

Moreover, organic peroxides and inorganic peroxides as polymerization initiators may be combined with reductants and used as redox polymerization initiators. Non-limiting examples of reductants that may be used in combination include compounds containing reduced metal ions, such as ferrous sulfate and cuprous naphthenate; sodium formaldehyde sulfoxylate, methane compounds such as sodium methanesulfonate, amine compounds such as dimethylaniline, ascorbic acid and salts thereof, and reducing inorganic salts such as alkali metal salts of sulfurous acid or thiosulfuric acid. These reductants may be used alone or in combinations of two or more. The amount of reductants used per 100 parts by mass of the monomers constituting the acrylic rubber is preferably 0.0003 to 10.0 parts by mass.

A chain transfer agent may be used as needed. Specific examples of chain transfer agents include n-hexyl mercaptan, n-octyl mercaptan, t-octyl mercaptan, n-dodecyl mercaptan, t-dodecyl mercaptan, n-stearyl mercaptan, and other alkyl mercaptans, 2,4-diphenyl-4-methyl-1-pentene, 2,4-diphenyl-4-methyl-2-pentene, dimethylxanthogen disulfide, diisopropylxanthogen disulfide, and other xanthogen compounds, terpinolene, tetramethylthiuram disulfide, tetraethylthiuram disulfide, tetramethylthiuram monosulfide, and other thiuram compounds, 2,6-di-t-butyl-4-methylphenol, styrenated phenol, and other phenolic compounds, allyl alcohol and other allyl compounds, dichloromethane, dibromomethane, carbon tetrabromide, and other halogenated hydrocarbon compounds, $\alpha$-benzyloxystyrene, $\alpha$-benzyloxyacrylonitrile, $\alpha$-benzyloxyacrylamide, and other vinyl ethers, triphenylethane, pentaphenylethane, acrolein, methacrolein, thioglycolic acid, thiomalic acid, and 2-ethylhexyl thioglycolate. One or two or more of these chain transfer agents may be used. Although the amount of these chain transfer agents is not limited, the amount per 100 parts by mass of the monomers constituting the acrylic rubber is usually 0 parts by mass to 5 parts by mass and may be 0.01 parts by mass to 3 parts by mass.

Examples of polymerization terminators include hydroxylamine, hydroxylamine sulfate, diethylhydroxyamine, hydroxyamine sulfonic acid and alkali metal salts thereof, sodium dimethyldithiocarbamate, and quinone compounds such as hydroquinone. These may be used alone or in combinations of two or more. Although the amount of polymerization terminators used is not limited, the amount per 100 parts by mass of the monomers constituting the acrylic rubber is usually 0 parts by mass to 2 parts by mass.

Furthermore, the pH of the polymer produced as described above may be adjusted using a base as a pH adjuster, if needed. Specific examples of such bases include sodium hydroxide, potassium hydroxide, calcium hydroxide, sodium hydrogen carbonate, ammonia, inorganic ammonium compounds, and organic amine compounds. The pH may range from 1 to 11, preferably from 1.5 to 10.5, more preferably from 2 to 10.

In addition to the above components, polymerization auxiliary materials such as a particle size modifier, a chelating agent, and an oxygen scavenger may be used as needed.

Emulsion polymerization may be performed batchwise, semi-batchwise, or continuously. The polymerization time and the polymerization temperature are not limited and can be selected appropriately according to the type of polymerization initiator used or other factors. Generally, the polymerization temperature is 10°C to 100°C, and the polymerization time is 0.5 to 100 hours.

The polymer produced as described above may be collected by any method, including common methods. Such an exemplary method includes continuously or batchwise feeding the polymerization solution obtained by, for example, emulsion polymerization to an aqueous solution containing a coagulant. This operation provides a water-containing crumb. In this operation, the temperature of the aqueous solution containing a coagulant can be affected by the type and amount of the monomers used or the coagulation conditions including the shear force generated by stirring or other means, and therefore cannot be uniformly specified, but the temperature is generally 50°C to 100°C, preferably in the range of 60°C to 100°C.

Furthermore, an antioxidant may be added during the coagulation process described above. Specific examples of antioxidants include phenolic antioxidants, amine antioxidants, phosphanol antioxidants, and hindered amine antioxidants. These may be used alone or in combinations of two or more.

Furthermore, the pH of the water-containing crumb obtained as described above may be adjusted using a base as a pH adjuster, if needed. Specific examples of such bases include sodium hydroxide, potassium hydroxide, calcium hydroxide, sodium hydrogen carbonate, ammonia, inorganic ammonium compounds, and organic amine compounds. The pH may range from 1 to 11, preferably from 2 to 10, more preferably from 4 to 8.

The water-containing crumb obtained as described above is preferably subjected to washing with water to remove the coagulant. If washing with water is not performed at all or is insufficient, ion residues derived from the coagulant may precipitate during the molding step.

The water-containing crumb after washing with water may be dehydrated and dried to obtain an acrylic rubber. Although the drying may be performed by any method, it is generally performed using a flash dryer or a fluid dryer. Moreover, the drying step may be preceded by a dehydration step using a centrifuge or other device.

From the standpoint of processability, the molecular weight range of the thus produced acrylic copolymer of the present invention is preferably 10 to 100, more preferably 15 to 90, still more preferably 20 to 80, as expressed by the Mooney viscosity (ML1+4) at 100°C determined in a Mooney scorch test as set forth in JIS K 6300.

<Acrylic rubber-containing composition>

The acrylic rubber-containing composition of the present invention can be obtained by containing the acrylic rubber described above and at least a crosslinking agent.

Examples of crosslinking agents include conventional crosslinking agents usually used in crosslinking of rubber, such as polyvalent amine compounds, polyvalent epoxy compounds, polyvalent isocyanate compounds, aziridine compounds, sulfur compounds, basic metal oxides, and organic metal halides. Polyvalent amine compounds are suitable among these.

Examples of polyvalent amine compounds include aliphatic polyvalent amine compounds such as hexamethylenediamine, hexamethylenediamine carbamate, and N,N'-dicinnamylidene-1,6-hexanediamine; and aromatic polyvalent amine compounds such as 4,4'-methylenedianiline, m-phenylenediamine, 4,4'-diaminodiphenyl ether, 3,4'-diaminodiphenyl ether, 4,4'-(m-phenylenediisopropylidene)dianiline, 4,4'-(p-phenylenediisopropylidene)dianiline, 2,2'-bis[4-(4-aminophenoxy)phenyl]propane, 4,4'-diaminobenzanilide, 4,4'-bis(4-aminophenoxy)biphenyl, m-xylylenediamine, p-xylylenediamine, 1,3,5-benzenetriamine, 1,3,5-benzenetriaminomethyl, and isophthalic acid dihydrazide. Preferred among these are aliphatic polyvalent amine compounds.

Examples of polyvalent epoxy compounds include phenol novolac epoxy compounds, cresol novolac epoxy compounds, cresol epoxy compounds, bisphenol A epoxy compounds, bisphenol F epoxy compounds, brominated bisphenol A epoxy compounds, brominated bisphenol F epoxy compounds, hydrogenated bisphenol A epoxy compounds, and other glycidyl ether epoxy compounds, alicyclic epoxy compounds, glycidyl ester epoxy compounds, glycidyl amine epoxy compounds, isocyanurate epoxy compounds, and other polyvalent epoxy compounds.

Examples of polyvalent isocyanate compounds include 2,4-tolylene diisocyanate, 2,6-tolylene diisocyanate, 4,4'-diphenylmethane diisocyanate, hexamethylene diisocyanate, p-phenylene diisocyanate, m-phenylene diisocyanate, 1,5-naphthylene diisocyanate, 1,3,6-hexamethylene triisocyanate, 1,6,11-undecane triisocyanate, and bicycloheptane triisocyanate.

Examples of aziridine compounds include tris-2,4,6-(1-aziridinyl)-1,3,5-triazine, tris[1-(2-methyl)aziridinyl]phosphinoxide, and hexa[1-(2-methyl)aziridinyl]triphosphatriazine.

Examples of sulfur compounds include sulfur, 4,4'-dithiomorpholine, tetramethylthiuram disulfide, and tetraethylthiuram disulfide.

Examples of basic metal oxides include zinc oxide, lead oxide, calcium oxide, and magnesium oxide.

Examples of organic metal halides include dicyclopentadienyl metal dihalides, and examples of the metal include titanium and zirconium.

These crosslinking agents may be used alone or in combinations of two or more. The amount of crosslinking agents per 100 parts by mass of the acrylic rubber of the present invention may be 0.05 parts by mass to 20 parts by mass, preferably 0.1 parts by mass to 10 parts by mass.

Moreover, the acrylic rubber-containing composition of the present invention may contain any other additives usually used in the art. Examples of such additives include lubricants, antioxidants, photostabilizers, fillers, reinforcing agents, plasticizers, processing aids, pigments, colorants, crosslinking accelerators, crosslinking aids, crosslinking retardants, antistatic agents, and foaming agents.

Examples of fillers include known fillers, and specific examples include calcium carbonate, talc, silica, clay, carbon fiber, glass fiber, carbon black, titanium oxide, magnesium oxide, hydrotalcite, magnesium hydroxide, antimony oxide, zinc oxide, and carbon black. These may be used alone or in combinations of two or more. Preferred among these is silica or carbon black.

The amount of fillers per 100 parts by mass of the acrylic rubber of the present invention may be 15 to 100 parts by mass, preferably 20 to 80 parts by mass.

Examples of softeners include lubricating oils, process oils, coal tar, castor oil, stearic acid, and calcium stearate. These may be used alone or in combinations of two or more.

The amount of softeners per 100 parts by mass of the acrylic rubber of the present invention may be 0.3 to 10 parts by mass, preferably 0.5 to 5 parts by mass.

Examples of antioxidants include amines, phosphates, quinolines, cresols, phenols, and dithiocarbamate metal salts. These may be used alone or in combinations of two or more. Preferred among these are amines such as diphenylamine derivatives and phenylenediamine derivatives.

The amount of antioxidants per 100 parts by mass of the acrylic rubber of the present invention may be 0.3 to 10 parts by mass, preferably 0.5 to 5 parts by mass.

Furthermore, rubbers, resins, and the like usually used in the art may be blended without departing from the gist of the present invention. Examples of usual rubbers that may be used in the present invention include polybutadiene rubbers, styrene-butadiene rubbers, polyisoprene rubbers, natural rubbers, acrylonitrile-butadiene rubbers, acrylonitrile-butadiene-isoprene rubbers, ethylene-propylene-diene rubbers, and epichlorohydrin rubbers, and examples of those resins include polymethyl methacrylate (PMMA) resins, polystyrene (PS) resins, polyurethane (PUR) resins, polyvinyl chloride (PVC) resins, ethylene/vinyl acetate (EVA) resins, styrene/acrylonitrile (AS) resins, and polyethylene (PE) resins. These may be used alone or in combinations of two or more.

The total amount of the above-mentioned rubbers and/or resins per 100 parts by mass of the acrylic rubber of the present invention may be 50 parts by mass or less, preferably 10 parts by mass or less, more preferably 1 part by mass or less.

To obtain the crosslinked rubber product of the present invention, the acrylic rubber-containing composition may be compounded using any means conventionally used in the field of rubber processing, such as an open roll mill, a Banbury mixer, or any of various kneaders. The compounding may be performed by usual procedures employed in the field of rubber processing. For example, the following procedure may be used: only a rubber is first kneaded, then compounding agents other than a crosslinking agent and a crosslinking accelerator are introduced to prepare an A-kneaded compound, and thereafter B-kneading is performed by adding the crosslinking agent and the crosslinking accelerator.

<Crosslinked rubber product>

The crosslinked rubber product of the present invention can be produced by crosslinking the acrylic rubber-containing composition.

The crosslinked rubber product of the present invention can be produced by heating the acrylic rubber-containing composition to usually 100°C to 250°C. Although the crosslinking time depends on the temperature, it is usually performed for 0.5 to 300 minutes. As for crosslinking and molding, crosslinking and molding may be performed in an integrated manner, or a previously molded product of the acrylic rubber-containing composition may be reheated to produce a crosslinked rubber product, or a crosslinked rubber product obtained by previously heating the composition may be processed for molding. The crosslinking and molding may be performed specifically by any method, including compression or injection molding using a mold, and heating using a steam can, an air bath, infrared rays, or microwaves.

The thus obtained acrylic rubber-containing composition of the present invention has excellent roll processability during processing, and the crosslinked rubber product of the present invention has excellent normal-state properties and excellent heat resistance under long-term high temperature conditions.

Thus, by taking advantage of the above-mentioned characteristics, the crosslinked rubber product of the present invention can be suitably used in O-rings, packings, diaphragms, oil seals, shaft seals, bearing seals, mechanical seals, well head seals, seals for electrical and electronic equipment, seals for pneumatic equipment, and various types of gaskets such as cylinder head gaskets which are mounted at the joint between a cylinder block and a cylinder head, rocker cover gaskets which are mounted at the joint between a rocker cover and a cylinder head, oil pan gaskets which are mounted at the joint between an oil pan and a cylinder block or transmission case, gaskets for fuel cell separators which are mounted between a pair of housings sandwiching a unit cell provided with an anode, an electrolyte plate, and a cathode, and gaskets for top covers of hard disk drives.

Moreover, the crosslinked rubber product of the present invention can be suitably used as extruded products or molded crosslinked products used in automotive applications, for example, in various hoses, including fuel oil hoses around fuel tanks such as fuel hoses, filler neck hoses, vent hoses, vapor hoses, and oil hoses; air hoses such as turbo air hoses and emission control hoses; radiator hoses, heater hoses, brake hoses, and air conditioner hoses.

EXAMPLES

The present invention will be specifically described with reference to examples and comparative example. However, the present invention is not limited to them.

(Measurement of molecular weight)

The molecular weight was determined as follows: an acrylic rubber was dissolved in tetrahydrofuran (THF) as a solvent and measured by gel permeation chromatography (GPC) using polystyrene standards.
The measurement was carried out using the GPC apparatus Alliance HPLC system (Waters Corp.) and two TSK gel HM-2 columns connected to each other (Tosoh Corporation) at a flow rate of 0.6 mL/min, a concentration of the polymer (acrylic rubber) of 10 mg/8 mL of THF, an injection volume of 40 $\mu$L, and a column temperature of 50°C.
The percentages of the fraction having a molecular weight of 500,000 or less and the fraction having a molecular weight of 2,000,000 or more in the acrylic rubber (polymer) were determined from the integral value (%) corresponding to a slice molecular weight of 500,000 or less and the integral value (%) corresponding to a slice molecular weight of 2,000,000 or more, respectively, in an integral value curve of the slice area drawn based on a molecular weight distribution curve plotted between the slice molecular weight and the slice area.
The weight average molecular weight (Mw) and number average molecular weight (Mn) of the acrylic rubber (polymer) were also calculated, and the molecular weight distribution (Mw/Mn) of the acrylic rubber (polymer) was calculated based on the calculation results.

<Mooney Viscosity (ML1+4 at 100°C)>

An acrylic copolymer was measured for Mooney viscosity (ML1+4) at a measurement temperature of 100°C using Mooney Viscometer AM-3 (Toyo Seiki Seisaku-sho, Ltd.) in accordance with the Mooney viscosity test of the physical testing methods for uncrosslinked rubber of JIS K 6300.

(Production of acrylic rubber A)

A polymerization reactor equipped with a thermometer, a stirring apparatus, a nitrogen introduction tube, and a pressure reducing apparatus was charged with 150 parts by mass of water, 1.2 parts by mass of sodium polyoxyalkylene alkyl ether phosphate, and, as monomers, 68.5 parts by mass of ethyl acrylate, 20 parts by mass of butyl acrylate, 10 parts by mass of 2-methoxyethyl acrylate, and 1.5 parts by mass of monobutyl fumarate, as well as 0.055 parts by mass of n-dodecyl mercaptan as a chain transfer agent. Oxygen was thoroughly removed by repetitive deaeration and nitrogen replacement under reduced pressure. Then, 0.072 parts by mass of sodium formaldehyde sulfoxylate and 0.06 parts by mass of potassium persulfate were added and an emulsion polymerization reaction was started at normal temperature under normal pressure. The reaction was continued until the polymerization conversion rate reached 95% to obtain a polymerization solution. The polymerization solution was coagulated with sodium sulfate and subjected to washing with water and drying to obtain an acrylic rubber A. The acrylic rubber A had a Mooney viscosity ML(1+4) at 100°C of 29. The percentages of the fraction having a molecular weight of 500,000 or less and the fraction having a molecular weight of 2,000,000 or more are shown in Table 1.

(Production of acrylic rubber B)

An acrylic rubber B was prepared as in the production of the acrylic rubber A, except that no n-dodecyl mercaptan was used. The acrylic rubber B had a Mooney viscosity ML(1+4) at 100°C of 49. The percentages of the fraction having a molecular weight of 500,000 or less and the fraction having a molecular weight of 2,000,000 or more are shown in Table 1.

(Production of acrylic rubber C)

An acrylic rubber C was prepared as in the production of the acrylic rubber A, except that the materials were changed to 0.025 parts by mass of n-dodecyl mercaptan, 0.12 parts by mass of sodium formaldehyde sulfoxylate, and 0.01 parts by mass of potassium persulfate. The acrylic rubber C had a Mooney viscosity ML(1+4) at 100°C of 36. The percentages of the fraction having a molecular weight of 500,000 or less and the fraction having a molecular weight of 2,000,000 or more are shown in Table 1.

(Production of acrylic rubber D)

An acrylic rubber D was prepared as in the production of the acrylic rubber A, except that the material was changed to 0.07 parts by mass of n-dodecyl mercaptan. The acrylic rubber D had a Mooney viscosity ML(1+4) at100°C of 24. The percentages of the fraction having a molecular weight of 500,000 or less and the fraction having a molecular weight of 2,000,000 or more are shown in Table 1.

(Production of acrylic rubber E)

An acrylic rubber E was prepared by mixing 67 parts by mass of the acrylic rubber A and 33 parts by mass of the acrylic rubber B. The percentages of the fraction having a molecular weight of 500,000 or less and the fraction having a molecular weight of 2,000,000 or more are shown in Table 1.

(Production of acrylic rubber F)

An acrylic rubber F was prepared by mixing 50 parts by mass of the acrylic rubber A and 50 parts by mass of the acrylic rubber B. The percentages of the fraction having a molecular weight of 500,000 or less and the fraction having a molecular weight of 2,000,000 or more are shown in Table 1.

(Production of acrylic rubber G)

An acrylic rubber E was prepared by mixing 33 parts by mass of the acrylic rubber A and 67 parts by mass of the acrylic rubber B. The percentages of the fraction having a molecular weight of 500,000 or less and the fraction having a molecular weight of 2,000,000 or more are shown in Table 1.

(Production of acrylic rubber H)

An acrylic rubber H was prepared as in the production of the acrylic rubber C, except that the material was changed to 0.015 parts by mass of n-dodecyl mercaptan, and 0.03 parts by weight of 1-thioglycerol was added when the polymerization addition rate reached 60%. The acrylic rubber H had a Mooney viscosity ML(1+4) at 100°C of 37. The percentages of the fraction having a molecular weight of 500,000 or less and the fraction having a molecular weight of 2,000,000 or more are shown in Table 1.

[Table 1]

| | Percentage (%) of fraction corresponding to 500,000 or less | Percentage (%) of fraction corresponding to 2,000,000 or more | Mw/Mn |
|---|---|---|---|
| Acrylic rubber A | 47 | 8 | 3.2 |
| Acrylic rubber E (A:B = 67:33) | 42 | 12 | 3.7 |
| Acrylic rubber F (A:B = 50:50) | 40 | 14 | 4.1 |
| Acrylic rubber G (A:B = 33:67) | 37 | 17 | 3.7 |
| Acrylic rubber B | 31 | 21 | 3.7 |
| Acrylic rubber C | 53 | 7 | 4.3 |
| Acrylic rubber D | 51 | 13 | 5.0 |
| Acrylic rubber H | 51 | 11 | 6.6 |

(Preparation of acrylic rubber composition)

First, the acrylic rubber shown in Table 2, carbon black (SEAST SO available from Tokai Carbon Co., Ltd.), stearic acid (stearic acid SAKURA available from NOF Corporation), and an antioxidant (NOCRAC CD available from Ouchi Shinko Chemical Industrial Co., Ltd.) were kneaded using a kneader at 100°C to prepare an A-kneaded compound.

The A-kneaded compound was kneaded at room temperature in an open roll mill and kneaded with hexamethylenediamine carbamate and an accelerator (Rhenogran XLA60 available from LANXESS) to prepare a B-kneaded compound, which was then formed into an uncrosslinked sheet having a thickness of 2 to 2.5 mm. The units for the compounding agents shown in Table 2 are "parts by mass".

[Table 2]

| Unit: parts by mass | Example 1 | Example 2 | Example 3 | Example 4 | Example 5 | Example 6 | Example 7 | Comparative Example 1 |
|---|---|---|---|---|---|---|---|---|
| Acrylic rubber A | 100 | | | | | | | |
| Acrylic rubber E (A:B = 67:33) | | 100 | | | | | | |
| Acrylic rubber F (A:B = 50:50) | | | 100 | | | | | |
| Acrylic rubber G (A:B = 33:67) | | | | 100 | | | | |
| Acrylic rubber B | | | | | | | | 100 |
| Acrylic rubber C | | | | | 100 | | | |
| Acrylic rubber D | | | | | | 100 | | |
| Acrylic rubber H | | | | | | | 100 | |
| Carbon black | 60 | 60 | 60 | 60 | 60 | 60 | 60 | 60 |
| Stearic acid | 2 | 2 | 2 | 2 | 2 | 2 | 2 | 2 |
| Antioxidant | 2 | 2 | 2 | 2 | 2 | 2 | 2 | 2 |
| Hexamethylenediamine carbamate | 0.6 | 0.6 | 0.6 | 0.6 | 0.6 | 0.6 | 0.6 | 0.6 |
| Accelerator | 2 | 2 | 2 | 2 | 2 | 2 | 2 | 2 |

(Evaluation of extrudability)

The uncrosslinked sheet was extruded at a L/D ratio of 10, a rotation speed of 60 rpm, a cylinder temperature of 60°C, and a die temperature of 80°C in accordance with the Garvey die extrusion test of ASTM-D-2230. The length of the extruded molding was evaluated on the following three-point scale: Excellent = 80 cm/min or more; Good = 80 to 60 cm/min; and Poor = 60 cm/min or less. The results are shown in Table 3.

(Evaluation of crosslinking shrinkage)

The length of the extruded molding obtained as above was measured before and after heating in an air oven at 180°C for three hours, and the crosslinking shrinkage rate was determined using the following equation. The results are shown in Table 3. A lower crosslinking shrinkage rate indicates a greater reduction in crosslinking shrinkage.

$$\frac{\text{Length of extruded molding before heating} - \text{Length of extruded molding after heating}}{\text{Length of extruded molding before heating}}$$

$$\times\ 1000\ =\ \text{Crosslinking shrinkage rate (\%)}$$

(Preparation of secondary crosslinked product)

The uncrosslinked rubber sheet was pressed at 180°C for 10 minutes to obtain a 2 mm-thick primary crosslinked product. The primary crosslinked product was further heated in an air oven at 180°C for three hours to obtain a secondary crosslinked product.

(Test of normal-state properties)

The secondary crosslinked product was evaluated in a tensile test and in a hardness test. The tensile test was carried out in accordance with the method specified in JIS K 6251, and the hardness test was carried out in accordance with the method specified in JIS K 6253.
Table 3 shows the test results of the examples and comparative example obtained by the test methods.
In the table, the tensile strength and elongation mean the tensile strength and elongation, respectively, defined in the tensile test of JIS K 6251, and the hardness means the hardness defined in the hardness test of JIS K 6253. The results are shown in Table 3. The normal-state properties expected for an acrylic rubber were considered to be maintained when the tensile strength was 8 MPa or higher, the elongation was 200% or higher, and the hardness was 60 or higher.

[Table 3]

| | Example 1 | Example 2 | Example 3 | Example 4 | Example 5 | Example 6 | Example 7 | Comparative Example 1 |
|---|---|---|---|---|---|---|---|---|
| Extrudability | Excellent | Excellent | Excellent | Excellent | Excellent | Excellent | Excellent | Good |
| Cross-linking shrinkage rate (%) | 12 | 18 | 17 | 21 | 20 | 16 | 7 | 28 |
| Normal-state properties | | | | | | | | |
| Tensile strength (MPa) | 11.3 | 11.3 | 11.8 | 11.8 | 11.5 | 10.6 | 11.6 | 12.2 |
| Elongation (%) | 240 | 240 | 250 | 250 | 250 | 270 | 240 | 240 |
| Hardness (JIS-A) | 69 | 65 | 67 | 66 | 67 | 68 | 68 | 66 |

Table 3 shows that the arylic rubber-containing compositions of Examples 1 to 7 contained an acrylic rubber with a fraction having a molecular weight of 500,000 or less and a fraction having a molecular weight of 2,000,000 or more as specified in the present invention and exhibited good extrudability and a lower crosslinking shrinkage; and that the crosslinked products thereof also maintained the normal-state properties expected for an acrylic rubber.

On the other hand, it is shown that Comparative Example 1 was inferior in crosslinking shrinkage to Examples 1 to 7.

INDUSTRIAL APPLICABILITY

The present invention provides an acrylic rubber with low crosslinking shrinkage. A crosslinked rubber product produced from a composition containing the acrylic rubber is suitable for automotive components, including for example seal materials, hose materials, anti-vibration materials, tube materials, belt materials, and boot materials.

**Claims**

1. An acrylic rubber, comprising:

   32% to 65% of a fraction having a molecular weight of 500,000 or less; and
   3% to 20% of a fraction having a molecular weight of 2,000,000 or more.

2. The acrylic rubber according to claim 1,
   wherein the acrylic rubber comprises 35% to 55% of a fraction having a molecular weight of 500,000 or less and 4% to 18% of a fraction having a molecular weight of 2,000,000 or more.

3. The acrylic rubber according to claim 1 or 2,
   wherein the acrylic rubber comprises 38% to 51% of a fraction having a molecular weight of 500,000 or less and 5% to 15% of a fraction having a molecular weight of 2,000,000 or more.

4. The acrylic rubber according to any one of claims 1 to 3,
   wherein the acrylic rubber comprises a structural unit selected from a structural unit derived from a halogen group-containing unsaturated monomer, a structural unit derived from a carboxy group-containing unsaturated monomer, and a structural unit derived from an epoxy group-containing unsaturated monomer.

5. An acrylic rubber-containing composition, comprising:

   the acrylic rubber according to any one of claims 1 to 4; and
   a crosslinking agent.

6. A crosslinked rubber product, produced from the acrylic rubber composition according to claim 5.

**INTERNATIONAL SEARCH REPORT**

| International application No. |
| --- |
| PCT/JP2021/013650 |

A. CLASSIFICATION OF SUBJECT MATTER
Int.Cl. C08F220/26(2006.01)i, C08L33/14(2006.01)i
FI: C08F220/26, C08L33/14

According to International Patent Classification (IPC) or to both national classification and IPC

B. FIELDS SEARCHED

Minimum documentation searched (classification system followed by classification symbols)
Int.Cl. C08F220/26, C08L33/14

Documentation searched other than minimum documentation to the extent that such documents are included in the fields searched
Published examined utility model applications of Japan      1922-1996
Published unexamined utility model applications of Japan    1971-2021
Registered utility model specifications of Japan            1996-2021
Published registered utility model applications of Japan    1994-2021

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP 2018-168343 A (ZEON CORPORATION) 01 November 2018 (2018-11-01), claims, paragraphs [0096]-[0099], [0108], [0109], production example 1, example 1 | 1-6 |
| A | JP 2009-40922 A (UNIMATEC CO., LTD.) 26 February 2009 (2009-02-26), claims | 1-6 |
| A | WO 2017/122617 A1 (ZEON CORPORATION) 20 July 2017 (2017-07-20), claims | 1-6 |

☐ Further documents are listed in the continuation of Box C.          ☒ See patent family annex.

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 21 May 2021 | 08 June 2021 |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

INTERNATIONAL SEARCH REPORT
Information on patent family members

International application No.

PCT/JP2021/013650

| | | |
|---|---|---|
| JP 2018-168343 A | 01 November 2018 | (Family: none) |
| JP 2009-40922 A | 26 February 2009 | WO 2009/022499 A1<br>EP 2177564 A1 |
| WO 2017/122617 A1 | 20 July 2017 | US 2019/0016889 A1<br>EP 3404056 A1<br>CN 108431097 A<br>KR 10-2018-0102111 A |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009040922 A